Europäisches Patentamt

European Patent Office

Office européen des brevets

(11) Veröffentlichungsnummer: **0 097 378**
**A2**

(12) # EUROPÄISCHE PATENTANMELDUNG

(21) Anmeldenummer: **83106131.2**

(22) Anmeldetag: **23.06.83**

(51) Int. Cl.³: **C 01 B 33/18**
**B 01 J 19/06**

(30) Priorität: **23.06.82 DE 3223454**

(43) Veröffentlichungstag der Anmeldung:
**04.01.84 Patentblatt 84/1**

(84) Benannte Vertragsstaaten:
**BE DE FR GB IT NL**

(71) Anmelder: **WACKER-CHEMIE GMBH**
**Prinzregentenstrasse 22**
**D-8000 München 22(DE)**

(72) Erfinder: **Loskot, Stephan, Dr. Dipl.-Chem.**
**Ludwigstrasse 37**
**D-8960 Kempten(DE)**

(72) Erfinder: **Kratel, Günter, Dr. Dipl.-Chem.**
**Alpenblickstrasse 10**
**D-8961 Durach-Bechen(DE)**

(72) Erfinder: **Mühlhofer, Ernst, Dr. Dipl.-Chem.**
**Öschle 20b**
**D-8961 Sulzberg(DE)**

(72) Erfinder: **Lang, Wilfried**
**Säntisstrasse 2**
**D-8961 Sulzberg(DE)**

(54) Verfahren zur Herstellung von pyrogenerzeugter Kieselsäure mit verstärkter Verdickungswirkung.

(57) Die Erfindung betrifft ein Verfahren zur Herstellung von pyrogenerzeugter Kieselsäure mit verstärkter Verdickungswirkung, wobei der Pyrolyseflamme zusätzliche Energie zugeführt wird.

EP 0 097 378 A2

Wacker-Chemie GmbH

Verfahren zur Herstellung von pyrogenerzeugter Kieselsäure
mit verstärkter Verdickungswirkung

---

Die Erfindung betrifft ein Verfahren zur Herstellung von
pyrogenerzeugter Kieselsäure mit verstärkter Verdickungswirkung. Weiterhin betrifft die Erfindung ein Verfahren zur
Einstellung des Verdickungswirkungsgrades von pyrogenerzeugter Kieselsäure.

Es sind bereits eine Reihe von Verfahren zur Herstellung von
Kieselsäuren mit verstärkt verdickender Wirkung bekannt
geworden. Beispielsweise wird nach DE-OS 23 37 495 mit Hilfe
eines Plasmabrenners aus Siliciumdioxid, Siliciummonoxid als
Zwischenprodukt erzeugt, das nach Rückoxidation in Gegenwart
von Wasserdampf und Amin in stark verdickend wirkende Kieselsäure überführt wird.

Ferner sind auch bereits Nachbehandlungsmethoden für pyrogenerzeugte Kieselsäure bekannt, die zu einer Erhöhung der
Verdickungswirkung von Kieselsäuren führen. Hierzu sei beispielsweise auf DE-OS 26 09 487 verwiesen, wonach pyrogenerzeugte Kieselsäure mit Siliciumtetrachlorid nachbehandelt
und anschließend entsäurert wird.

Es wurde nun gefunden, daß eine erhöhte Verdickungswirkung
aufweisende pyrogenerzeugte Kieselsäure dadurch erhalten

- 2 -

wird, daß der Pyrolyseflamme zusätzliche Energie zugeführt wird.

Gegenstand der Erfindung ist ein Verfahren zur Herstellung von pyrogenerzeugter Kieselsäure, das dadurch gekennzeichnet ist, daß der Pyrolyseflamme zusätzliche Energie zugeführt wird.

Vorzugsweise wird die zusätzliche Energie mit Hilfe eines oder mehrerer Zusatzbrenner zugeführt, wobei die zusätzliche Energie in Form von Gasflammen eingeführt wird. Als hierfür einzusetzende Brenngase können alle Gase eingesetzt werden, die auch bereits bisher zur pyrogenen Herstellung von Kieselsäure eingesetzt wurden. Beispiele hierfür sind Methan, Ethan, Propan, Wasserstoff, Wassergas, Leuchtgas, Methanol u. a.

Andere Beispiele für die Einführung zusätzlicher Energie sind u. a. Bestrahlungsmethoden, insbesondere Bestrahlung mit Laserlicht.

Die erfindungsgemäß einzusetzende zusätzliche Energie wird bevorzugt in Mengen von 20 bis 150 %, bezogen auf den Energieinhalt der Pyrolyseflamme eingeführt. Der Energieinhalt der Pyrolyseflamme ergibt sich aus der Summe der Reaktionsenthalpien der Reaktionsteilnehmer.

Die Energieeinspeisung erfolgt bevorzugt im Bereich von 1/4 bis 3/4 der Längsausdehnung der Pyrolyseflamme, jeweils vom Brennermund ab gemessen. Besonders bevorzugt wird die zusätzliche Energie im Bereich der Spitze des Innenkegels der Pyrolyseflamme zugeführt.

Die Energieeinspeisung kann sowohl an einer als auch an
mehreren Stellen der Pyrolyseflamme erfolgen. Es werden
hierfür beispielsweise ringförmig ausgebildete Brenner benutzt. Die Gasflammen können dabei senkrecht auf die
Längsachse der Pyrolyseflamme gerichtet sein. Oftmals wird
jedoch ein Winkel von 30 bis 70° in Richtung des
Produktstromes eingehalten. Die Einspeisung der Energie mit
anderen Methoden, beispielsweise mit Bestrahlungsmethoden,
erfolgt analog.

Es sei in diesem Zusammenhang ausdrücklich unterschieden
zwischen einer Einbringung von Energie, beispielsweise in
Form von Brenngas, direkt am oder vor dem Brennermund -
auch wenn sie im Überschuß erfolgt, bezogen auf den Energiebedarf des pyrolytischen Prozesses - und der erfindungsgemäßen
Einführung zusätzlicher Energie in die Pyrolyseflamme bzw.
in den, die Flamme bildenden Produktstrom.

Durch Anwendung des erfindungsgemäßen Verfahrens wird die verdickende Wirkung der so erzeugten Kieselsäure erhöht. Unter
"Steuerung der Verdickungswirkung" soll im Rahmen der Erfindung eine Erhöhung der Verdickungswirkung in einem bestimmten, erwünschten Ausmaß verstanden werden. Grundsätzlich
steigt bei jeweils gleicher Anordnung die verdickende Wirkung
der Kieselsäure mit Erhöhung der zusätzlich zugeführten Energie. Überraschenderweise sinkt jedoch der Bedarf an zusätzlicher Energie zum Erreichen eines bestimmten Verdickungswirkungsgrades mit der Vergrößerung der Pyrolyseflamme in
der Weise, daß bei hohem Durchsatz, jeweils bezogen auf den
Energieinhalt der Pyrolyseflamme prozentual weniger zusätzliche Energie benötigt wird. Weiterhin wird der größte Verdickungswirkungseffekt, immer jeweils bezogen auf die gleiche Anordnung und auf den gleichen zusätzlich eingebrachten
Energiebetrag, erzielt, wenn die zusätzliche Energie im Bereich der Spitze des inneren Pyrolyseflammenkegels eingebracht wird. Erfolgt die Energieeinspeisung in weiterem Abstand vom Brennermund, so sinkt allmählich der Verdickungswirkungseffekt. Ebenso sinkt der Verdickungswirkungseffekt
immer jeweils gemessen vom Bereich der Spitze des inneren
Flammenkegels aus, wenn die Energieeinspeisung näher am
Brennermund erfolgt. Erfolgt die Einspeisung der zusätzlichen
Energie direkt am Brennermund, ist der erfindungsgemäße
Effekt nicht mehr erzielbar. Die Steuerung des Verdickungswirkungsgrades erfolgt mithin

a) durch die Menge der zusätzlich eingebrachten Energien

b) durch Auswahl des Einspeisungsortes innerhalb der Pyrolyseflamme.

Grundsätzlich läßt sich das erfindungsgemäße Verfahren innerhalb der auch bereits bisher bekannten Verfahren zur Herstellung pyrogenerzeugter Kieselsäuren als zusätzliche Maßnahme
zur Erhöhung und Steuerung der Verdickungswirkung der so erzeugten Kieselsäure durchführen. Beispielsweise kann die
Arbeitsweise gemäß DE-OS 26 20 737 angewandt werden, ohne
daß die Erfindung etwa darauf beschränkt wäre.

Als Ausgangsverbindungen werden auch die bereits bisher zur
Erzeugung pyrogener Kieselsäuren verwandten Siliciumverbindungen eingesetzt. Beispiele hierfür sind Siliciumtetrachlorid, Siliciumtetrafluorid, Organosilane, wie Tetramethylsilan, Trimethylchlorsilan, Dimethyldichlorsilan, Methyltrichlorsilan, insbesondere jedoch Siliciumtetrachlorid.

Ferner können auch andere, unter Wasserbildung verbrennende Gase eingesetzt werden, wie z. B. Wasserstoff, Wassergas, Leuchtgas, Methan, Propan, u. a. In der Regel wird eine solche Menge an unter Wasserbildung verbrennendem Gas zugeführt, daß in der Reaktionsflamme eine Temperatur von 800 - 1450 °C, insbesondere 1000 - 1300 °C, erreicht wird sowie die Hydrolyse jeder Si-Cl-Bindung stattfinden kann.

Als die Verbrennung unterhaltende Gase werden sauerstoffhaltige Gase, wie Sauerstoff in reiner Form, Sauerstoffgemische mit mindestens 15 Vol.-% Sauerstoff, wobei Inertgase, wie Stickstoff zugemischt sein können. Zumeist wird als die Verbrennung unterhaltendes Gas Luft eingesetzt.

Nach dem erfindungsgemäßen Verfahren gelingt es, pyrogenerzeugte Kieselsäure mit erhöhter Verdickungswirkung herzustellen. Die Erhöhung der Verdickungswirkung bezieht sich jeweils auf die Verdickungswirkung der pyrogenerzeugten Kieselsäure, die ohne die erfindungsgemäße Zusatzmaßnahme bei gegebener Arbeitsweise erreicht wird. Es gelingt ferner, die Verdickungswirkung einzustellen, d. h. das Ausmaß der Erhöhung der Verdickungswirkung zu steuern.

Die erfindungsgemäß hergestellte Kieselsäure eignet sich allgemein als Verdickungsmittel. Besonders wirksam ist sie als Verdickungsmittel von flüssigen Medien wie z. B. Alkoholen, PVC-Plastisolen, Organosolen (Unterbodenschutzmassen) und Polyestern. Weiterhin können die erfindungsgemäß hergestellten Kieselsäuren als Zusatzmittel für Zahnpflege- oder Zahnreinigungsmittel eingesetzt werden.

Die Erfindung wird nun anhand von Beispielen näher erläutert:

Vergleichsbeispiel 1

22 kg/h $SiCl_4$ werden mit 20 $Nm^3$/h Wasserstoff und 90 $Nm^3$/h Luft vermischt, über eine konusförmige Eintrittsöffnung in eine Brennkammer eingeschleust und zu Kieselsäure umgesetzt. Gegen den Brennermund wird zusätzlich ein Luftstrom von 8 $Nm^3$/h gerichtet. Die Pyrolyseflamme ist ca. 3 m lang und brennt in einer luftgekühlten Reaktionskammer. Es wird eine Kieselsäure mit einer BET-Oberfläche von 200 $m^2$/g erhalten.

Die verdickende Wirkung der Kieselsäure wird anhand der Viskositätszunahme ermittelt, die eine 65 Gew.-%ige Polyphthalsäureglycolesterlösung in Styrol bei Zugabe von 3 Gew.-% Kieselsäure, erfährt. Die Messung wird am Rotationsviskosimeter RV3 der Fa. Haake durchgeführt.

Die Viskosität der Polyesterlösung beträgt bei 20°C und bei 12,5 Upm 1300 mPa.s.

Unter Berücksichtigung der angegebenen Grundviskosität wird nach Zugabe von 3 Gew.-% Kieselsäure unter den wie oben angegebenen Meßbedingungen eine relative Viskosität von 4000 mPa.s ermittelt.

Beispiel 1

Es wird die Arbeitsweise gemäß Vergleichsbeispiel 1 wiederholt, mit der Abänderung, daß im Abstand von 1 Meter und 1,20 m , jeweils gemessen vom Brennermund über 2 Brenner je 1,5 $Nm^3$/h Propangas im Winkel von 45° in Richtung des Produktstromes der Pyrolyseflamme zugeführt werden.

Die verdickende Wirkung wird wie in Vergleichsbeispiel 1 beschrieben, gemessen. Es wird eine relative Viskosität von 8000 mPa.s bei 20°C und 12,5 Upm ermittelt.

Vergleichsbeispiel 2

Es wird die Arbeitsweise gemäß Vergleichsbeispiel 1 wiederholt, mit der wesentlichen Abänderung, daß bei wesentlich höheren Durchsätzen gearbeitet wird:
Es werden 200 kg/h $SiCl_4$ in Gegenwart von 14 $Nm^3$/h Propan, 120 $Nm^3$/h Wasserstoff vermischt mit 30 $Nm^3$/h $CO_2$ und 486 $Nm^3$/h Luft zu Kieselsäure umgesetzt.

Eine 3 Gew.-%ige Suspension dieser Kieselsäure in styrolischer Polyphthalsäureglycolesterlösung ( gemessen analog Vergleichsbeispiel 1)weist eine relative Viskosität von 3100 mPa.s auf.

Beispiel 2

Es wird die Arbeitsweise gemäß Vergleichsbeispiel 2 wiederholt, mit der Abänderung, daß über 4 Zusatzbrenner jeweils 1,3 $Nm^3$/h Propangas als zusätzliche Energie der Pyrolyseflamme zugeführt werden. Die 4 Brenner sind paarweise angeordnet im Abstand von 1,20 m und 1,50 m vom Brennermund, wobei sich jeweils 2 Brenner, die das Brennerpaar bilden, genau gegenüber stehen und die beiden Brennerpaare jeweils um 90° zueinander versetzt sind.

Es wird eine Kieselsäure erhalten, die als 3 Gew.-%ige Suspension in Polyesterlösung (gemessen analog Vergleichsbeispiel 2) eine relative Viskosität von 6200 mPa.s bei 20°C und 12,5 Upm aufweist.

Patentansprüche

1. Verfahren zur Herstellung von pyrogenerzeugter Kieselsäure, d a d u r c h   g e k e n n z e i c h n e t ,   daß der Pyrolyseflamme zusätzliche Energie zugeführt wird.

2. Verfahren nach Anspruch 1, d a d u r c h   g e k e n n - z e i c h n e t ,   daß zusätzliche Energie in Mengen von 20 bis 150 %, bezogen auf den Energiegehalt der Pyrolyseflamme zugeführt wird.

3. Verfahren nach mindestens einem der Ansprüche 1 und 2, d a d u r c h   g e k e n n z e i c h n e t ,   daß die Energie im Bereich von 1/4 bis 3/4 der Längsausdehnung der Pyrolyseflamme eingeführt wird.

4. Verfahren nach mindestens einem der Ansprüche 1, 2 und 3, d a d u r c h   g e k e n n z e i c h n e t ,   daß als Ausgangsmaterial Siliciumtetrachlorid eingesetzt wird.

5. Verwendung von pyrogenerzeugter Kieselsäure nach mindestens einem der Ansprüche 1, 2, 3 und 4 als Verdickungsmittel.